# EUROPEAN PATENT APPLICATION

(11) **EP 4 811 583 A1**
(43) Date of publication of application: **23.09.2026**
(21) Application number: 25164988.5
(22) Date of filing: 20.03.2025
(51) Int. Cl.: H02J 3/00, H02J 3/24, H02J 3/38

(54) **METHOD IMPLEMENTED IN A GRID FORMING CONTROL SYSTEM, A GRID FORMING CONTROL SYSTEM AND AN ELECTRICAL POWER NETWORK SYSTEM**

(71) Applicant: Hitachi Energy Ltd, 8050 Zürich (CH)
(72) Inventor: Khayat, Yousef, 72478 Västerås (SE); Bongiorno, Massimo, 41261 Göteborg (SE); Heydari, Rasool, 722 26 Västerås (SE); Hasler, Jean-Philippe, 72244 Västerås (SE)
(74) Representative: AWA Sweden AB

(57) **Abstract**

There is disclosed herein a method (100) implemented in a grid forming control system (1) of a power converter (20) being connected to an electrical power network (10). The grid forming control system comprises a synchronization unit (12) providing a back electromotive force, EMF voltage to a virtual admittance controller (14) and a current limiter (16). The method comprises determining (110) a non-limited power parameter based on a non-limited current obtained from the virtual admittance controller and a back electromotive force voltage, determining (120) a limited power parameter based on a limited current obtained from the current limiter and a measured voltage, and providing (130) a power deceleration parameter based on the non-limited power parameter and the limited power parameter, wherein an input to the synchronization unit is based on the power deceleration parameter. The present disclosure further relates to a grid forming control system and an electrical power network system.

## Description

### Technical field

The present disclosure relates to a method implemented in a grid forming control system of a power converter. The present disclosure further relates to a grid forming control system and an electrical power network system.

### Background

Renewable energy sources, based on for example wind and solar power, offer significant environmental benefits by reducing greenhouse gas emissions and phasing out fossil fuels. However, transitioning to such renewable energy sources degrades both voltage and frequency stability of the electrical power network system to which these renewable energy sources are connected. To ensure the stability of the electrical power network system, active and reactive power support is usually required.

With increasing penetration of renewable energy sources into the power grids, the need for fault ride through capability becomes crucial. Fault ride through capability refers to the ability of a power converter to remain connected to the electrical power network and maintain stable operation during faults in the electrical power network, thereby ensuring grid stability and reliability; otherwise, it might lead to loss of synchronization of the power converters, i.e., that the voltage and phase angle no longer align with voltage of the electrical power network.

Power converters that are controlled to act as a voltage source for grid forming are one way of improving the fault ride through capability. A challenge with the grid forming control for power converters is that keeping the voltage source behavior during faults would require high currents, beyond the levels that the power converter can tolerate. Their limited overcurrent capacity makes them more vulnerable against power network side disturbances.

To successfully ride through these disturbances, current limiting control methods have been presented for grid forming power converters. In the scientific article entitled "FRT Capability of Grid-Forming Power Converters: An Anti-Windup Scheme," published in IEEE Transactions on Power Electronics, Khayat et al. propose a control scheme to enhance fault ride through performance which is one example of a current limiting control method. However, there is still a demand for improved control methods which provide larger deceleration power and that increase the synchronization stability.

### Summary

It is therefore an object of the present disclosure to provide a method implemented in a grid forming control system of a power converter, which alleviates at least part of the above-mentioned drawbacks. It is for example an object of the present disclosure to provide a method which increases the deceleration power of a power converter. Further, it is an object of the present disclosure to provide a method which reduces the risk of loss of synchronization during phase jumps and voltage dip faults and that is able to provide inertia response power to limit the rate of change of frequency. Further objects of the present disclosure are to provide a grid forming control system for a power converter and an electrical power network system.

According to a first aspect of the present disclosure, a method implemented in a grid forming control system of a power converter being connected to an electrical power network at a point of common coupling is provided. The grid forming control system comprises a synchronization unit providing a back electromotive force, EMF voltage to a virtual admittance controller and a current limiter. The method comprises determining a non-limited power parameter based on a non-limited current obtained from the virtual admittance controller and a back electromotive force, EMF, voltage. The method further comprises determining a limited power parameter based on a limited current obtained from the current limiter and a voltage measured at the point of common coupling, and providing a power deceleration parameter based on the non-limited power parameter and the limited power parameter, wherein an input to the synchronization unit is based on the power deceleration parameter.

According to a second aspect of the present disclosure, a grid forming control system for a power converter being connected to an electrical power network at a point of common coupling is provided. The grid forming control system comprises a synchronization unit, a virtual admittance controller, and a current limiter. The grid forming control system is configured to perform the method according to the first aspect.

According to a third aspect of the present disclosure, an electrical power network system is provided. The electrical power network system comprises a power converter controlled by a grid forming control system according to the second aspect.

With the provided method implemented in the grid forming control system, fault ride through is improved. Fault ride through refers to the ability of the power converter to remain connected to the electrical power network and maintain stable operation during faults, thereby ensuring grid stability and reliability. Two main reasons contribute to loss of synchronization. The first reason is when an active power reference of the synchronization unit exceeds the amount of power injection that electrical power network conditions allow. The second reason is the synchronization unit's inability to follow a voltage angle of the electrical power network in case of an angle jump or frequency disturbance in the electrical power network. For both cases, the grid forming control system's effort to work beyond the saturation level of the power converter is the main reason for losing its synchronization. The provided method allows the power converter to recognize how much power that can be injected toward the electrical power network and modifies it so that the synchronization unit tries to adjust its control effort to avoid operating beyond the saturation level of the power converter.

In the present method, an improved input based on the power deceleration parameter is provided to the synchronization unit. The non-limited power parameter is obtained based on the EMF voltage and the non-limited current obtained from the virtual admittance controller and the limited power parameter is obtained from the voltage measured at the point of common coupling and the limited current obtained from the current limiter. This provides a power transfer limit where the non-limited power parameter describes how the control mechanism of the grid forming control system tends to participate with a large amount of reactive power during voltage dip transients and with a large amount of active power during rate of change of frequency transients, generally multiple times of the capacity of the power converter, and the limited power parameter limits the non-limited power parameter based on the capacity of the power converter and describes the amount of limited power that the power converter can inject due to the current limiter. In view of the first reason for loss of synchronization, the power deceleration parameter reduces the power reference based on the reduced active power transfer capability extracted from the limited power and the non-limited power. In view of the second reason for loss of synchronization, the power deceleration of the power converter will always be known by the synchronization unit through the power deceleration parameter, so the power control error needed to follow frequency changes in the electrical power network is already provided to the synchronization unit, and consequently, the synchronization unit can adjust the power converter's internal frequency in response to the power deceleration parameter.

Due to the non-limited power parameter being based on the EMF voltage and the limited power parameter being based on the voltage measured at the point of common coupling, the difference between the limited power parameter and the non-limited power parameter will increase and thereby the power converter will be allowed to provide an increased deceleration power. In prior art methods, both the non-limited power parameter and the limited power parameter are based on the voltage measured at the point of common coupling. The EMF voltage will be higher than the voltage measured at the point of common coupling when the power converter operates at saturation level and therefore the difference between the limited power parameter and the non-limited power parameter will increase.

The EMF voltage may be seen as the internal voltage of the power converter. The EMF voltage is the voltage of the power converter before considering the effects of any impedances. The voltage measured at the point of common coupling will be affected by the voltage drop across the impedances of the power converter and the electrical power network and will therefore be lower than the EMF voltage. The voltage drop is the current flowing from the power converter into the electrical power network multiplied with the total series impedance of the power converter and the electrical power network. The voltage measured at the common point of coupling may be seen as the EMF voltage subtracted by the voltage drop. Therefore, the EMF voltage will be higher than the voltage measured at the point of common coupling and a higher deceleration power can be provided.

Deceleration power may also be described as the ability of the power converter to provide inertia response power for limiting the rate of change of frequency, and to provide response power for damping disturbances and phase jumps.

The method utilizes the limited power parameter obtained from the current limiter and the non-limited power parameter obtained from the virtual admittance controller for modifying the input, active power input, to the synchronization unit such that the power converter may allocate the remaining capacity to inject reactive power and thereby support the electrical power network during transients.

The synchronization unit may also be seen as an active power loop of the grid forming control system. The synchronization unit is provided with an active power parameter that is based on the limited power parameter and the non-limited power parameter. These parameters are obtained from the grid forming control system such that a loop of the active power input is provided. Thus, a modified input to the synchronization process of the synchronization unit is provided. The synchronization unit is responsible for emulating the swing equation of a conventional synchronous generator to regulate the active power of the power converter exchanged with the electrical power network and to calculate the phase-angle of a virtual back EMF.

An amplitude (E) of the virtual back EMF may be provided by a reactive power controller and/or a voltage controller. The EMF voltage may be provided based on the phase-angle and the amplitude of the virtual back

### EMF.

The virtual admittance controller is implemented to provide more accurate and decoupled control of the active and reactive powers, and for generating the non-limited current. The virtual admittance controller determines how the power converter behaves in relation to electrical power network conditions. By adjusting the virtual admittance, the power converter can modify its impedance characteristics, thereby influencing how the new generated reference currents can respond to variations in voltage of the electrical power network.

The current limiter generates the limited current based on the non-limited current provided by the virtual admittance controller. The current limiter is provided to avoid that the power converter operates beyond its capacity. The current limiter is configured to limit the current below a saturation level of the power converter. The limited current may be used as an input to a current controller which is used to control the output of the power converter.

The saturation level of a power converter refers to the point at which the power converter or one of its components (such as an inductor, transformer, or semiconductor switch) reaches its maximum operating capacity and can no longer function efficiently.

The input to the synchronization unit may be further based on a power reference and an injected active power from the power converter.

The input, active power input, to the synchronization unit may be an active power reference indicating the active power required by the electrical power network subtracted with the power deceleration parameter and the injected power parameter. The injected power parameter may be indicative of how much power the power converter injects to the electrical power network. The active power input to the synchronization unit may be indicative of how the output of the power converter should change to support the electrical power network. Throughout the present description, either an input for how much power the power converter should inject or an input of how the injected power by the power converter should be changed may be used for the synchronization unit. If the injected power parameter is used, the grid forming control system will operate based on how the injected power should be changed. If the injected power parameter is not used, the grid forming control system will instead operate based on what injected power output the power converter should provide.

The power deceleration parameter may be calculated as a negative gain multiplied with the difference between the non-limited power parameter and the limited power parameter.

Equation 1 describes how the power deceleration parameter may be calculated. ${P}_{dec} = - {k}_{wp} \left({P}_{N - lim}-{P}_{lim}\right)$ wherein P_{dec} is the power deceleration parameter, P_{N-lim} is the non-limited power parameter, Pₗᵢₘ is the limited power parameter, and k_{wp} is the gain. The gain may be determined based on design requirements for the electrical power network's short circuit ratios, and the virtual impedance value of the power converter. The gain may be a normalized unit gain.

The non-limited power parameter may be calculated as the real power part of the back EMF voltage multiplied with the conjugate of the non-limited current.

Equation 2 describes how the power deceleration parameter may be calculated. ${P}_{N _ Lim} = Re \left\{{V}_{EMF}\times conj \left({I}_{N - lim}\right)\right\}$ wherein V_{EMF} is the EMF voltage obtained from the synchronization unit and I_{N-lim} is the non-limited current, i.e., the current obtained from the virtual admittance controller.

The limited power parameter may be calculated as the real power part of the voltage measured at the point of common coupling multiplied with the conjugate of the limited current.

Equation 3 describes how the power deceleration parameter may be calculated. ${P}_{Lim} = Re \left\{{V}_{PCC}\times conj \left({I}_{lim}\right)\right\}$ wherein V_{PCC} is the voltage measured at the point of common coupling and Iₗᵢₘ is the non-limited current, i.e., the current obtained from the virtual admittance controller.

The non-limited power parameter may be representative of an active power requested by the electrical power network. The non-limited power parameter describes (or is representative of) the amount of power that the electrical power network would require for proper damping. It is not certain that the power converter is able to deliver the current required to fulfil the non-limited power parameter and therefore the current limiter is provided to limit the non-limited current.

The limited power parameter may be representative of a maximum active power that the power converter is able to deliver to the electrical power network. The limited power parameter is based on the limited current provided by the current limiter which has been limited down to a maximum current, i.e., a saturation level, of the power converter. In other words, the limited current may be the non-limited current limited by the current limiter to be below a saturation level of the power converter. This results in that if the non-limited current is below or equal to the saturation level of the current limiter, the non-limited current and the limited current will be equal. If the non-limited current is above the saturation level of the current limiter, the non-limited current will be limited to be below or equal to the saturation level of the current limiter. The saturation level may be set to be at least 1 per unit, pu, and at most 2 pu of the rated current of the power converter.

The non-limited current may be calculated as a difference between the back EMF voltage and the voltage measured at the point of common coupling divided by a virtual impedance of the virtual admittance controller.

Equation 4 describes how the power deceleration parameter may be calculated. ${I}_{N - Lim} = \left({V}_{EMF}-{V}_{PCC}\right) / {Z}_{VA}$ wherein Z_{VA} is the impedance of the virtual admittance controller.

The grid forming control system may further comprise a further current limiter (18) having a saturation level below a saturation level of the current limiter, wherein the limited current may be obtained from the further current limiter. The saturation level of the further current limiter may be based on requirement of the electrical power network and the power converter. The saturation level of the further current limiter may be 1 pu of the rated current of the power converter.

When a further current limiter is provided, the limited power parameter may be obtained from the further current limiter and, as the saturation level of the further current limiter is below the saturation level of the current limiter, the difference between the non-limited power parameter and the limited power parameter may increase. Thus, an increase deceleration power may be provided.

When a further current limiter is provided, the limited power parameter may be obtained from the further current limiter. However, the limited current used as input to the current controller may still be obtained from the current limiter.

Effects and features of the second aspect and third aspect may be largely analogous to those described above in connection with the first aspect. Embodiments mentioned in relation to the first aspect may be at least largely compatible with the second aspect and the third aspect. It is further noted that the present disclosure relates to all possible combinations of features unless explicitly stated otherwise.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that the present disclosure is not limited to the particular parts of the method, the grid forming control system, and the electrical power network system described herein. It is also to be understood that the terminology used herein is for the purpose of describing particular embodiments only, and it is not intended to be limiting.

### Brief description of the drawings

The above and other aspects of the present disclosure will now be described in more detail, with reference to the appended figures, wherein:
- Fig. 1: schematically shows an overview of an electrical power network system.
- Fig. 2: schematically shows an overview of a method implemented in a grid forming control system.
- Fig. 3: schematically shows a grid forming control scheme for the grid forming control system.

### Detailed description

The present disclosure is described in the following by way of a number of illustrative examples. It will be appreciated that these examples are provided for illustration and explanation only and are not intended to be limiting on the scope of the disclosure.

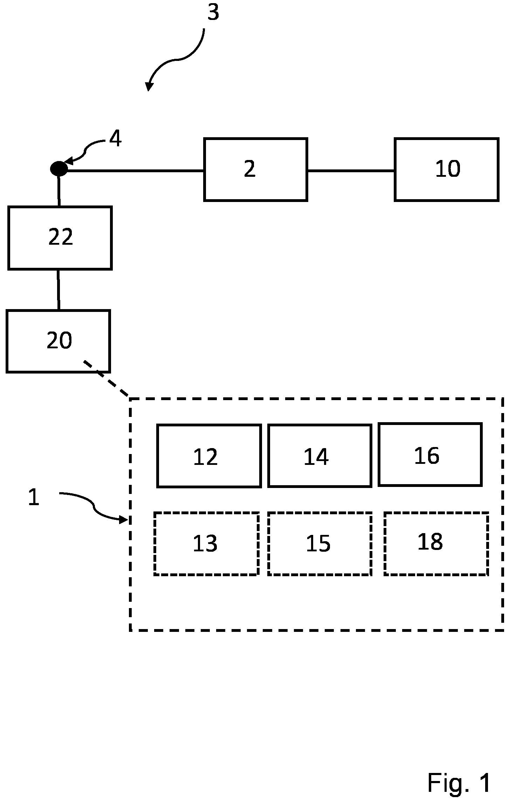

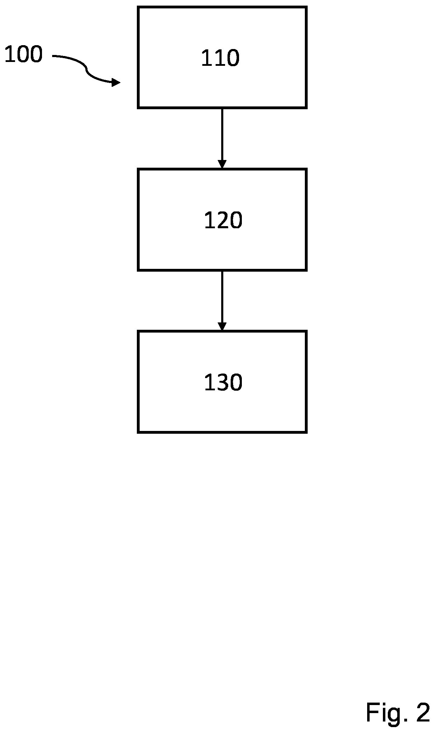

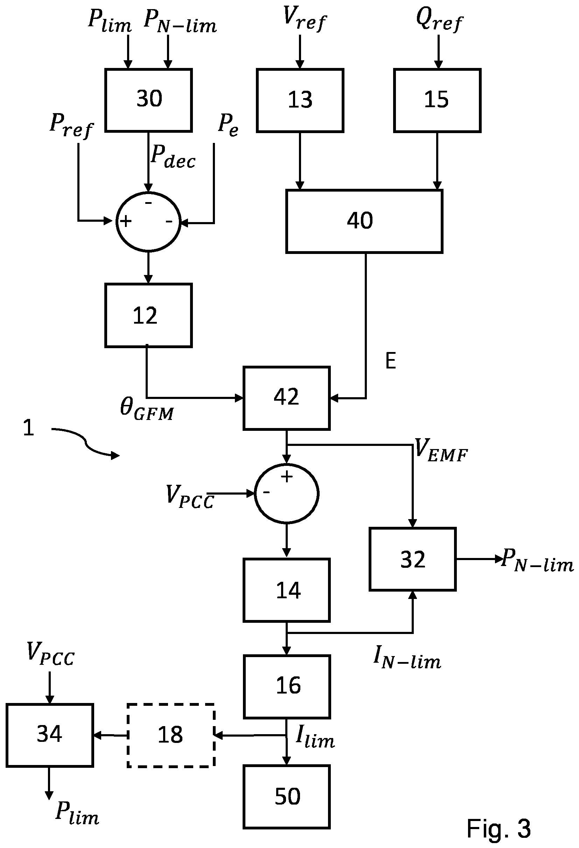

Fig. 1 schematically illustrates an electrical power network system 3 comprising a power converter 20 controlled by a grid forming control system 1. The grid forming control system 1 comprises a synchronization unit 12, a virtual admittance controller 14 and a current limiter 16. The grid forming control system 1 is configured to perform a method 100 that will be further discussed in connection to Figs. 2 and 3.

The electrical power network system 3 further comprises an electrical power network 10 to which the power converter 20 is connected at a point of common coupling 4. An impedance 2 representative of the impedance of the electrical power network is illustrated by box 2 and an impedance 22 representative of the impedance of the power converter 20 is illustrated by box 22. The internal voltage of the power converter 20 can be seen as the back electromotive force, EMF, voltage V_{EMF}. The internal voltage is the voltage of the power converter 20 before considering the effects of any impedances 2, 22. The voltage V_{PCC} measured at the point of common coupling 4 will be affected by the voltage drop across the impedances 2, 22 and will therefore be lower than the EMF voltage V_{EMF}. The voltage drop is the current flowing from the power converter 20 into the electrical power network 10 multiplied with the total series impedance 2, 22 of the power converter and the electrical power network. The voltage V_{PCC} may be seen as the EMF voltage subtracted by the voltage drop. Both of these voltages will be used in the method 100.

The EMF voltage V_{EMF} is provided by the synchronization unit 12. To obtain the EMF voltage V_{EMF}, the synchronization unit 12 is provided with an active power parameter that indicates how much power the electrical power network 10 is requesting. The synchronization unit 12 is responsible for emulating the swing equation of a conventional synchronous generator to regulate the active power of the power converter 20 exchanged with the electrical power network 10 and to calculate a phase-angle θ_{GFM} of a virtual back EMF.

The grid forming control system 1 may further comprise a voltage controller 13 and/or a reactive power controller 15. An amplitude E of the .virtual back EMF may be provided by the voltage controller 13 and/or the reactive power controller 15. The EMF voltage V_{EMF} may be provided based on the phase-angle from the synchronization unit 12 and the amplitude E from the voltage controller 13 and/or the reactive power controller 15.

The virtual admittance controller 14 is configured to generate the non-limited current I_{N-lim}. The virtual admittance controller 14 determines how the power converter 20 behaves in relation to electrical power network conditions. By adjusting virtual admittance, the power converter 20 can modify its impedance characteristics, thereby influencing how it responds to variations in voltage of the electrical power network 10.

The current limiter 16 generates the limited current Iₗᵢₘ based on the non-limited current I_{N-lim} provided by the virtual admittance controller 14. The current limiter 16 is provided to avoid that the power converter 20 operates beyond its capacity. The current limiter 16 limits the current to be below a saturation level of the power converter 20. The limited current may be used as an input to a current controller 50 (shown in Fig. 3), which is used to control the output of the power converter 20. The saturation level of the current limiter 16 may be based on requirements of the electrical power network 10 and the power converter 20. The saturation level of the current limiter 16 may be set to be at least 1 per unit, pu, and at most 2 pu of the rated current of the power converter 20.

A further current limiter 18 may also be provided in the grid forming control system 1. The further current limiter 18 has a saturation level below a saturation level of the current limiter 16. When the further current limiter 18 is present, the limited current Iₗᵢₘ for the calculation of the limited power parameter Pₗᵢₘ may be obtained from the further current limiter 18 instead of the current limiter 16, such that the current is first limited by the current limiter 16 and then further limited by the further current limiter 18. However, the input to the current controller 50 may be obtained from the current limiter 16. The saturation level of the further current limiter 18 may be based on requirement of the electrical power network 10 and the power converter 20. The saturation level of the further current limiter may, as an example, be 1 pu of rated current of the power converter 20.

In Fig. 2 an overview of the method 100 is illustrated. The method 100 may be implemented in the grid forming control system 1 and the electrical power network 10 as described in connection to Fig. 1.

The method 100 comprises determining 110 a non-limited power parameter P_{N-lim} based on a non-limited current I_{N-lim} obtained from the virtual admittance controller 12 and a back electromotive force, EMF, voltage V_{EMF}.

The method 100 further comprises determining 120 a limited power parameter Pₗᵢₘ based on a limited current Iₗᵢₘ obtained from the current limiter 16 and a voltage V_{PCC} measured at the point of common coupling 4.

The method 100 further comprises providing 130 a power deceleration parameter P_{dec} based on the non-limited power parameter P_{N-lim} and the limited power parameter Pₗᵢₘ, wherein an input to the synchronization unit 12 is based on the power deceleration parameter P_{dec}.

The method 100 will be further described in connection to an exemplifying grid forming control system 1 as depicted in Fig. 3.

The grid forming control system 1 comprises the earlier described components of the synchronization unit 12, the virtual admittance controller 14, the current limiter 16 and the current controller 50. The grid forming control system 1 further comprises the voltage controller 13 and the reactive power controller 15.

The grid forming control system 1 is configured to control the output of the power converter 20. The control is based on the limited current Iₗᵢₘ input to the current controller 50. The aim of the grid forming control system 1 is to control the power converter 20 such that fault ride throughs are possible. As previously mentioned, fault ride throughs refer to the ability of the power converter 20 to remain connected to the electrical power network 10 and maintain stable operation during faults, thereby ensuring electrical power network stability and reliability. The grid forming control system 1 tries to avoid that loss of synchronization happens. Loss of synchronization mainly happens when the power injection from the power converter 20 exceeds the power injection that an electrical power network condition allows, or when grid forming control system 1 tries to operate the power converter 20 beyond the saturation level of the power converter 20. To avoid loss of synchronization, the provided method 100 allows the grid forming control system to recognize how much power that can be injected into the electrical power network 10 and also allows the synchronization unit to adjust its output to avoid operating beyond the saturation level of the power converter 20.

A power reference P_{ref}, an injected active power parameter Pₑ and the power deceleration parameter P_{dec} are used as input to the synchronization unit 12. The power reference P_{ref} indicates the active power required by the electrical power network 10. The injected active power parameter Pₑ indicates how much power the power converter 20 currently injects to the electrical power network 10. The input to the synchronization unit 12 may be the power reference P_{ref} subtracted with the injected active power parameter Pₑ and the power deceleration parameter P_{dec} The input to the synchronization unit 12 is in this case indicative of how much the output of the power converter 20 should change to support the electrical power network 10.

The synchronization unit 12 is responsible for emulating the swing equation of a conventional synchronous generator to regulate the active power of the power converter 20 exchanged with the electrical power network and to calculate the phase-angle θ_{GFM} of a virtual back electromotive force

### EMF.

Further, the amplitude E of the virtual back EMF may be obtained from the voltage controller 13 and/or the reactive current controller 15. The voltage controller 13 has a voltage reference V_{ref} as input and the reactive power controller 15 has a reactive power reference Q_{ref} as input. A switch 40 controls which of the voltage controller 13 and the reactive power controller 15 provides the amplitude E at a certain point of time to obtain the EMF voltage V_{EMF}.

The phase-angle θ_{GFM} and the amplitude E are combined in a modulation block 42 to obtain the EMF voltage V_{EMF}. The EMF voltage V_{EMF} is the voltage at the power converter 20 before it has been affected by any impedances 2, 22. The voltage V_{PCC} measured at the point of common coupling 4 will be affected by the voltage drop across the impedances 2, 22 and will therefore be lower than the EMF voltage V_{EMF}, as discussed above in connection to Fig. 1.

The voltage V_{PCC} measured at the point of common coupling 4 is subtracted from the EMF voltage V_{EMF} and the resulting voltage is an input to the virtual admittance controller 14. The virtual admittance controller 14 generates the non-limited current I_{N-lim} based on said resulting voltage and a virtual admittance (or virtual impedance) determined by an operator or the grid forming control system 1. The non-limited current I_{N-lim} may be calculated as a difference between the back EMF voltage V_{EMF} and the voltage V_{PCC} measured at the point of common coupling 4 divided by a virtual impedance Z_{VA} of the virtual admittance controller 14. See Equation 4 above.

The EMF voltage V_{EMF} and the non-limited current I_{N-lim} are used to calculate the non-limited power parameter P_{N-lim} in a calculation unit 32. The non-limited power parameter P_{N-lim} is calculated as the real power part of the back EMF voltage V_{EMF} multiplied with the conjugate of the non-limited current I_{N-lim}. This is earlier described in Equation 2. The non-limited power parameter P_{N-lim} describes how the power converter 20 of the grid forming control system 1 tends to participate during transients. The non-limited power parameter P_{N-lim} is looped back to a calculation unit 30 which is used to determine the power deceleration parameter P_{dec}. The non-limited power parameter P_{N-lim} describes the amount of power that the electrical power network 10 would require for proper damping. It is not certain that the power converter 20 is able to deliver the current required to fulfil the non-limited power parameter P_{N-lim}, i.e., it is not certain that the power converter 20 is able to deliver the calculated non-limited current I_{N-lim} requested, and therefore the current limiter 16 is provided.

The non-limited current I_{N-lim} is therefore used as input to the current limiter 16, thereby providing the limited current Iₗᵢₘ which limits the current to be below a set saturation level of the power converter 20. This results in that, if the non-limited current I_{N-lim} is below or equal to the saturation level of the power converter 20, the non-limited current I_{N-lim} and the limited current Iₗᵢₘ will be equal. If the non-limited current I_{N-lim} is above the saturation level of the power converter 20, the non-limited current I_{N-lim} will not be equal to the limited current Iₗᵢₘ (which is kept below or equal to the saturation level of the power converter 16 by the current limiter 16).

The limited current Iₗᵢₘ is thereafter used as an input to the current controller 50 used for controlling the power converter 20.

Optionally, the limited current Iₗᵢₘ may be further limited by a further current limiter 18, as discussed above.

The limited current Iₗᵢₘ is provided together with the voltage V_{PCC} measured at the point of common coupling 4 as an input to a calculating unit 34. The calculating unit 34 calculates a limited power parameter Pₗᵢₘ. The limited power parameter Pₗᵢₘ may be calculated as the real power part of the voltage V_{PCC} measured at the point of common coupling 4 multiplied with the conjugate of the limited current Iₗᵢₘ. This is described in Equation 3 above.

The limited power parameter Pₗᵢₘ may be representative of a maximum active power that the power converter 20 is able to deliver to the electrical power network 10.

The non-limited power parameter P_{N-lim} and the limited power parameter P_{Lim} are provided to the calculation unit 30 to calculate the power deceleration parameter P_{dec}. Equation 1 already provided above describes how the power deceleration parameter P_{dec} may be calculated.

The non-limited power parameter P_{N-lim} and the limited power parameter Pₗᵢₘ provides a power transfer limit where the non-limited power parameter P_{N-lim} describes how the power converter 20 of the grid forming control system 1 tends to participate during transients and the limited power parameter Pₗᵢₘ describes the amount of active power that the power converter 20 can inject. These two parameters are fed back to provide the upcoming changes in the operation of the power converter 20, serving as an input to the initial stage of the grid-forming control system 1. In other words, the method 100 utilizes the limited power parameter P_{Lim} obtained from the current limiter 16 and the non-limited power parameter P_{N-Lim} obtained from the virtual admittance controller 14 for modifying the input (active power input) to the synchronization unit 12 such that the power converter 20 may allocate the remaining capacity to inject reactive power for electrical power network support during transients.

As earlier discussed, there are two main reasons contributing to loss of synchronization of the power converter 20. Firstly, loss of synchronization may occur when an active power reference P_{ref} of the synchronization unit 12 exceeds the amount of power injection that power network conditions allow. Secondly, loss of synchronization may occur when the synchronization unit 12 is unable to follow the electrical power network voltage angle in case of an angle jump or frequency disturbance in the electrical power network 10.

In view of the first reason for loss of synchronization, the power deceleration parameter P_{dec} reduces the power reference P_{ref} based on the reduced active-power transfer capability extracted from the limited power parameter Pₗᵢₘ and non-limited power parameter P_{N-lim}. In view of the second reason for loss of synchronization, the power deceleration of the power converter 20 will always be known by the synchronization unit 12 through the power deceleration parameter P_{dec}, so a power control error, i.e., the error between the non-limited power parameter P_{N-lim} and the limited power parameter Pₗᵢₘ, needed to follow grid frequency change is already informed to the synchronization unit 12, and consequently, the synchronization unit 12 can adjust the power converter's 20 internal frequency by the power control error. Therefore, the risk for loss of synchronization is reduced.

While the present disclosure is susceptible to various modifications and alternative forms, specific examples are shown and described in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims, including the possible combination of various elements of these specific examples.

## Claims

1. A method (100) implemented in a grid forming control system (1) of a power converter (20) being connected to an electrical power network (10) at a point of common coupling (2), wherein the grid forming control system comprises a synchronization unit (12) providing a back electromotive force, EMF, voltage to a virtual admittance controller (14) and a current limiter (16), the method comprising;
determining (110) a non-limited power parameter based on a non-limited current obtained from the virtual admittance controller and a back electromotive force, EMF, voltage,
determining (120) a limited power parameter based on a limited current obtained from the current limiter and a voltage (V_{PCC}) measured at the point of common coupling 4, and
providing (130) a power deceleration parameter based on the non-limited power parameter and the limited power parameter, wherein an input to the synchronization unit is based on the power deceleration parameter.

2. The method according to claim 1, wherein the input to the synchronization unit is further based on a power reference and an injected active power parameter from the power converter.

3. The method according to claim 1 or 2, wherein the power deceleration parameter is calculated as a negative gain multiplied with the difference between the non-limited power parameter and the limited power parameter.

4. The method according to any one of the preceding claims, wherein the non-limited power parameter is calculated as the real power part of the back EMF voltage multiplied with the conjugate of the non-limited current.

5. The method according to any one of the preceding claims, wherein the limited power parameter is calculated as the real power part of the voltage measured at the point of common coupling multiplied with the conjugate of the limited current.

6. The method according to any one of the preceding claims, wherein the non-limited power parameter is representative of an active power requested by the electrical power network.

7. The method according to any one of the preceding claims, wherein the limited power parameter is representative of a maximum active power that the power converter is able to deliver to the electrical power network.

8. The method according to any one of the preceding claims, wherein the non-limited current is calculated as a difference between the back EMF voltage and the voltage measured at the point of common coupling divided by a virtual impedance of the virtual admittance controller.

9. The method according to any one of the preceding claims, wherein the limited current is the non-limited current limited by the current limiter to be below a saturation level of the power converter.

10. The method according to claim 9, wherein the saturation level is set to be at least 1 per unit, pu, and at most 2 pu of the rated current of the power converter.

11. The method according to any one of the preceding claims, wherein the grid forming control system further comprises a further current limiter (18) having a saturation level below a saturation level of the current limiter, wherein the limited current is obtained from the further current limiter.

12. A grid forming control system (1) for a power converter (20) being connected to an electrical power network (10) at a point of common coupling (4), the grid forming control system comprises a synchronization unit (12), a virtual admittance controller (14), a current limiter (16), wherein the grid forming control system is configured to perform the method according to any one of the preceding claims.

13. The grid forming control system according to claim 12, further comprising a voltage controller (13).

14. The grid forming control system according to claim 12 or 13, further comprising a reactive power controller (15).

15. An electrical power network system (3) comprising a power converter controlled by a grid forming control system according to any one of claims 12 to 14.
